# EUROPÄISCHE PATENTSCHRIFT

(11) **EP 2 066 204 B1**
(45) Veröffentlichungstag und Bekanntmachung des Hinweises auf die Patenterteilung: **17.06.2015**
(21) Anmeldenummer: 07802884.2
(22) Anmeldetag: 24.08.2007
(51) Int. Cl.: A47J 43/07, A47J 44/00

(54) **SICHERHEITSMECHANISMUS FÜR EINE KÜCHENMASCHINE MIT ZWEI KUPPLUNGSSTELLEN**
SAFETY MECHANISM FOR A FOOD PROCESSOR HAVING TWO COUPLING POINTS
MÉCANISME DE SÉCURITÉ POUR UN ROBOT MÉNAGER COMPORTANT DEUX POINTS D'ACCOUPLEMENT

(30) Priorität: 13.09.2006 DE 102006042982
(43) Veröffentlichungstag der Anmeldung: 10.06.2009
(73) Patentinhaber: BSH Hausgeräte GmbH, 81739 München (DE)
(72) Erfinder: ZIBRET, Igor, 3327 Smartno Ob Paki (SI); MAZEJ, Stanislav, 3303 Gomilsko (SI); BLAGOTINSEK, Andrej, 2380 Slovenj Gradec (SI)
(86) Internationale Anmeldenummer: PCT/EP2007/058841
(87) Internationale Veröffentlichungsnummer: WO 2008/031708

(56) Entgegenhaltungen:
- WO-A-95/20903
- DE-A1- 3 933 036
- DE-A1- 19 646 423
- GB-A- 2 387 558

## Beschreibung

### Hintergrund der Erfindung

Die vorliegende Erfindung betrifft eine Küchenmaschine mit zwei an ihrem Gehäuse voneinander beabstandet angeordneten Kupplungsstellen gemäß dem Oberbegriff des Anspruchs 1.

### Stand der Technik

Die WO 95/20903 A offenbart eine Küchenmaschine mit zwei an ihrem Gehäuse voneinander beabstandet angeordneten Kupplungsstellen zum Aufsetzen von Beaarbeitungswerkzeug. Der Motor der Küchenmaschine kann nur, falls beide Kupplunasstellen mit Bearbeitungswerkzeugen versehen sind, eingeschaltet werden.

Aus dem Europäischen Patent EP 1272084 B1 ist eine Küchenmaschine bekannt, die an zwei Stellen ihres Gehäuses Kupplungsstellen für Bearbeitungsgeräte aufweist. Genauer befindet sich an einem waagerechten Sockelteil des Gehäuses eine Kupplungsstelle für eine Rührschüssel mit Deckel und auf einem einen Motor enthaltenden Gehäuseteil eine Aufnahmemulde zum Ankuppeln eines weiteren Bearbeitungsgeräts. An jeder Kupplungsstelle ragt das Ende einer Welle zum Ankuppeln eines Werkzeuges des jeweiligen Bearbeitungsgerätes frei zugänglich aus dem Gehäuse heraus. Durch einen Betriebsschalter am Gehäuse kann der Motor angeschaltet werden, um die Wellen in Betrieb zu setzen. Wenn nun an einer der Kupplungsstellen kein Bearbeitungsgerät aufgesetzt und diese Kupplungsstelle auch nicht auf andere Weise abgedeckt ist, besteht die Gefahr, dass sich ein Benutzer am freiliegenden Ende der rotierenden Antriebswelle oder an einem daran angebrachten Werkzeug verletzt.

Um eine Verletzung zu verhindern, ist die aus der EP 1272084 B1 bekannte Maschine mit einem Schutzmechanismus ausgestattet, der unterbinden soll, dass die Küchenmaschine in Betrieb gesetzt werden kann, wenn eine der Kupplungsstellen frei liegt. Dazu sind zusätzlich zu dem Betriebsschalter im Stromkreis des Antriebsmotors zwei in Reihe liegende elektrische Kontaktschalter vorgesehen, von denen der eine durch das Aufsetzen des Deckels auf die auf der einen Kupplungsstelle befindliche Rührschüssel und der andere durch das Aufsetzen eines Bearbeitungsgerätes oder eines Abdeckteiles auf die andere Kupplungsstelle geschlossen werden kann.

### Der Erfindung zugrundeliegende Aufgabe

Die bekannte Küchenmaschine benötigt wenigstens zwei elektrische Kontaktschalter, einen für jede Kupplungsstelle. Die Kontaktschalter können in erhöhtem Maße verschleißanfällig und ausfallgefährdet sein. Wenn nur einer der beiden Kontaktschalter ausfällt ist die bekannte Küchenmaschine funktionsunfähig. Außerdem können die Kontaktschalter als elektrische Komponenten teuer sein. Es ist deshalb eine Aufgabe der vorliegenden Erfindung, eine Küchenmaschine zu schaffen, die mit weniger Kontaktschaltern konstruiert werden kann.

### Erfindungsgemäße Lösung

Zu Lösung der Aufgabe lehrt die vorliegende Erfindung eine Küchenmaschine mit den Merkmalen des Anspruchs 1.

Wenn eine der Kupplungsstellen wegen fehlendem Bearbeitungsgerät und fehlender Abdeckung frei liegt, ist der Schalter geöffnet und der Motor von der Stromzufuhr getrennt, sodass Verletzungen vermieden werden können. Dadurch, dass erfindungsgemäß ein Schalter vorgesehen ist, der mit beiden Erfassungseinrichtungen beider Kupplungsstellen zusammenwirkt, ist es vorteilhaft möglich, mit nur einem Kontaktschalter eine Unterbrechung der Stromversorgung des Motors zu erreichen, wenn eine der Kupplungsstellen offen liegt.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Der Kontaktschalter ist in einer bevorzugten Ausführung der Erfindung im Stromkreis des Motors angeordnet, und kann nur dann in seiner geschlossenen Stellung stehen, wenn auf jeder Kupplungsstelle ein Bearbeitungsgerät oder ein Abdeckteil aufsitzt. In einer anderen Ausführung der Erfindung ist der Kontaktschalter an ein Steuergerät angeschlossen, das seinerseits die Stromzufuhr zum Motor regelt.

Gemäß der Erfindung wird das Zusammenwirken von Erfassungseinrichtungen und Kontaktschalter durch ein Schaltelement zum Betätigen des Kontaktschalters vermittelt. Das Schaltelement ist durch die Erfassungseinrichtungen derart bewegbar, dass es den Kontaktschalter nur betätigen kann, wenn auf jeder Kupplungsstelle ein Bearbeitungsgerät oder ein Abdeckteil aufsitzt. Das Betätigungselement führt insofern eine logische Und-Operation aus. Vorzugsweise können die Erfassungseinrichtungen direkt auf das Schaltelement einwirken, es sind aber auch Ausführungen der Erfindung denkbar, bei denen das Schaltelement indirekt durch die Erfassungseinrichtungen bewegbar ist.

Das Schaltelement ist durch die beiden Erfassungseinrichtungen in jeweils unterschiedliche Richtungen bewegbar, sodass es nur durch die Summe der Bewegungen in eine Position gebracht werden kann, in der es den Kontaktschalter betätigt. Das Schaltelement ist, direkt oder indirekt, durch Betätigen der Erfassungseinrichtung einer ersten der beiden Kupplungsstellen verschiebbar und durch Betätigen der Erfassungseinrichtung einer zweiten der beiden Kupplungsstellen um eine Achse drehbar.

In einer bevorzugten Ausführung der Erfindung ist das Schaltelement mit einem Langloch versehen, in das ein Zapfen eingreift, sodass das Schaltelement vorteilhaft in Richtung des Langlochs verschiebbar und um die Achse des Zapfens drehbar ist. Der Zapfen ist vorzugsweise in dem Gehäuse der Küchenmaschine fest angeordnet. An Stelle des Langlochs kann auch eine Nut vorgesehen sein.

Ein bevorzugtes Schaltelement weist eine Rückstelleinrichtung auf, um es in eine Ausgangsstellung zurückzustellen, aus der es durch eine der Erfassungseinrichtungen herausbewegt werden kann, wenn diese durch die Anwesenheit eines Bearbeitungsgeräts betätigt wird. Vorzugsweise kann die Rückstelleinrichtung über das Schaltelement auch die Erfassungseinrichtung zurückstellen, wenn diese nicht durch die Anwesenheit eines Bearbeitungsgeräts betätigt wird. Ein bevorzugtes Schaltelement ist zusätzlich oder alternativ dazu durch den Kontaktschalter in eine Ausgangsstellung rückstellbar, aus er es durch eine der Erfassungseinrichtungen herausbewegt werden kann, wenn diese durch die Anwesenheit eines Bearbeitungsgeräts betätigt wird. Der Kontaktschalter weist dazu vorzugsweise ein Betätigungselement auf, das in eine offene Stellung des Kontaktschalters vorgespannt ist und über das er mit dem Schaltelement zusammenwirkt. Vorzugsweise kann der Kontaktschalter über das Schaltelement auch die Erfassungseinrichtung zurückstellen, wenn diese nicht durch die Anwesenheit eines Bearbeitungsgeräts betätigt wird. Vorzugsweise wird das Schaltelement durch die Rückstelleinrichtung in Längsrichtung des Langlochs oder der Nut und/oder durch den Kontaktschalter in Drehrichtung um den Zapfen zurückgestellt. Die Rückstelleinrichtung ist vorzugsweise eine Schraubenfeder, die besonders vorzugsweise in dem Langloch oder der Nut des Schaltelements angeordnet ist.

Es kann vorkommen, dass ein Benutzer der gattungsgemäßen Küchenmaschine die Rührschüssel, den Deckel oder ein anderes Bearbeitungsgerät oder ein Abdeckteil während des Betriebs entfernt. Zwar wird auch bei der vorbekannten Küchenmaschine in diesem Fall die Stromzufuhr des Motors unterbrochen, jedoch läuft der Motor noch aus, bevor er vollständig zum Stehen kommt. Weil in der Zeit bis zum vollständigen Stillstand des Motors möglicherweise eine Verletzungsgefahr besteht, ist es wünschenswert, dass der Motor möglichst schnell abgebremst werden kann. In einer Ausführung der Erfindung ist zu diesem Zweck ein weiterer Schalter vorgesehen, der so angeordnet ist, dass er in gleicher Weise wie der Kontaktschalter mit den Erfassungseinrichtungen zusammenwirkt, sodass auch er auf gleiche Weise betätigbar ist. Der weitere Schalter ist vorzugsweise so an den Motor angeschlossen, dass er bei Betätigung die Polarität der Statorwicklung des Motors vertauscht, um den Motor schnell abzubremsen. In einer Ausführung der Erfindung kann die Wirkung der beiden Schalter zusammen den Motor in 1,5 Sekunden oder weniger zum Stillstand bringen. Vorzugsweise wird der weitere Schalter nach dem Kontaktschalter betätigt. Dadurch kann ein Kurzschluss vermieden werden. In einer anderen Ausführung der Erfindung sind beide Funktionen, das Unterbrechen des Motorstromkreises und das Umpolen der Statorwicklung, in einem einzigen Schalter integriert.

Eine bevorzugte Küchenmaschine weist außerdem einen Betriebsschalter auf einer Gehäuseaußenseite auf, um die Küchenmaschine in Betrieb zu setzen. Der Motor kann mit dem Betriebsschalter ein- und ausgeschaltet werden und/oder die Motorleistung oder Motordrehzahl kann geregelt werden. Vorzugsweise ist der Betriebsschalter auf einer gemeinsamen Leiterplatte mit dem Kontaktschalter angeordnet, besonders vorzugsweise auch mit dem weiteren Schalter. Die gemeinsame Anordnung aller elektrischen Schaltelemente auf einer gemeinsamen Leiterplatte kann die Konstruktion der Küchenmaschine vereinfachen und die Herstellungskosten senken.

In einer Ausführung der Erfindung ist auch das Schaltelement auf dieser Leiterplatte angeordnet. Da sich gewöhnlich wenigstens eine der Kupplungsstellen nicht direkt am Ort des Schaltelements befindet, umfasst mindestens eine Erfassungseinrichtung zweckmäßigerweise einen Hebel. Der Hebel weist vorzugsweise ein Tastelement auf, um die Anwesenheit eines Bearbeitungsgeräts zu erfassen, und ein Betätigungselement, um den Kontaktschalter zum direkt oder indirekt zu betätigen. Dazu ist das Tastelement zweckmäßigerweise an einem Ende des Hebels an der Kupplungsstelle angeordnet, während das Betätigungselement am Schaltelement angeordnet ist, um es aufgrund einer Betätigung des Tastelements zu bewegen. Der Hebel ist vorzugsweise an seinem tastelementseitigen Ende am Gehäuse festgelegt und um diesen Punkt schwenkbar.

In einer bevorzugten Ausführung der Erfindung ist an eine der Kupplungsstellen ein Bearbeitungsgerät ankuppelbar, das eine Rührschüssel und einen Deckel zum Abdecken der Rührschüssel umfasst. Wenn in einem solchen Fall zwar die Rührschüssel angebracht ist, nicht jedoch der Deckel, ist es denkbar, dass ein Benutzer beim Betrieb in die Schüssel greift und sich an der in der Schüssel rotierenden Welle oder dem in der Schüssel rotierenden Werkzeug verletzt. Umgekehrt ist es auch denkbar, dass ein Benutzer zwar den Deckel an die Küchenmaschine anbringt nicht jedoch die Rührschüssel, sodass ebenfalls Welle oder Werkzeug frei liegen und Verletzungen verursachen können. Um solchen Verletzungen vorzubeugen ist die erfindungsgemäße Küchenmaschine vorzugsweise mit einem Mechanismus ausgestattet, der einen Betrieb der Maschine nur erlaubt, wenn sowohl Rührschüssel als auch Deckel an der Kupplungsstelle angebracht sind. Die der Kupplungsstelle zugeordnete Erfassungseinrichtung umfasst vorzugsweise ein Element zum Detektieren der Rührschüssel, ein Element zum Detektieren des Deckels und ein Betätigungselement zum direkten oder indirekten Betätigen des Kontaktschalters. Vorzugsweise wirken die Elemente so miteinander und mit dem Kontaktschalter zusammen, dass der Kontaktschalter nur dann in seiner geschlossenen Stellung stehen kann, wenn auf der Kupplungsstelle die Rührschüssel aufsitzt und auf der Rührschüssel der Deckel aufsitzt.

Der Deckel kann auch ein Aufsatz mit einer eigenen weiteren Funktion sein, z.B. ein Aufsatz zum Auspressen von Zitrusfrüchten.

Vorzugsweise ist ein Element zum Detektieren der Rührschüssel bzw. des Deckels ein Tastelement, das durch Aufsetzen eines Mitglieds der Gruppe Rührschüssel und Deckel betätigbar ist, oder ein Freigabelelement, das durch Aufsetzen eines Mitglieds der Gruppe Rührschüssel und Deckel von einer Blockierstellung in eine Freigabestellung gebracht werden kann. Besonders vorzugsweise ist das eine der beiden Elemente zum Detektieren der Rührschüssel bzw. des Deckels ein Tastelement und das andere ein Freigabeelement, die so zusammenwirken, dass das Betätigungselement den Kontaktschalter nur dann in seiner geschlossenen Stellung bringen kann, wenn das Tastelement betätigt ist und das Freigabeelement in seiner Freigabestellung steht.

Das bevorzugte Freigabeelement ist um eine Achse zwischen der Blockierstellung und der Freigabestellung drehbar. Es umfasst vorzugsweise ein Rückstellelement, um es von der Freigabestellung in die Blockierstellung zurückzustellen, wenn die Rührschüssel nicht aufgesetzt ist. Ein bevorzugtes Rückstellelement ist eine Schraubenfeder. Das Freigabeelement weist außerdem vorzugsweise einen Hebel auf, der durch einen Vorsprung der Rührschüssel oder des Deckels betätigbar ist, um es in seine Freigabestellung zu bringen. Besonders vorzugsweise ist der Hebel durch einen Vorsprung der Rührschüssel betätigbar. Weil bei gewöhnlichem Gebrauch der Deckel nach, frühestens aber gleichzeitig mit der Rührschüssel angebracht wird, kann hierdurch kann vorteilhaft erreicht werden, dass das Freigabeelement sich in seiner Freigabestellung befindet, wenn das Tastelement durch den Deckel betätigt wird.

Das Tastelement und das Betätigungselement sind vorzugsweise durch einen Hebelabschnitt verbunden, besonders vorzugsweise einstückig. Das bevorzugte Freigabeelement greift in seiner Blockierstellung derart an dem hebelabschnitt an, dass es ein Umsetzen einer Betätigung des Tastelements in eine den Kontaktschalter betätigende Bewegung unterbinden kann.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: Eine perspektivische Ansicht einer erfindungsgemäßen Küchenmaschine ohne Gehäuse mit einer Rührschüssel und aufgesetztem Deckel als erstem Bearbeitungsgerät und einem Mixbecher mit aufgesetztem Deckel als zweitem Bearbeitungsgerät; und
- Fig. 2:: Eine perspektivische Ansicht der Leiterplatte der Küchenmaschine mit den elektrischen Schaltbauteilen und dem Schaltelement sowie den Erfassungseinrichtungen.

### Ausführliche Beschreibung eines Ausführungsbeispiels

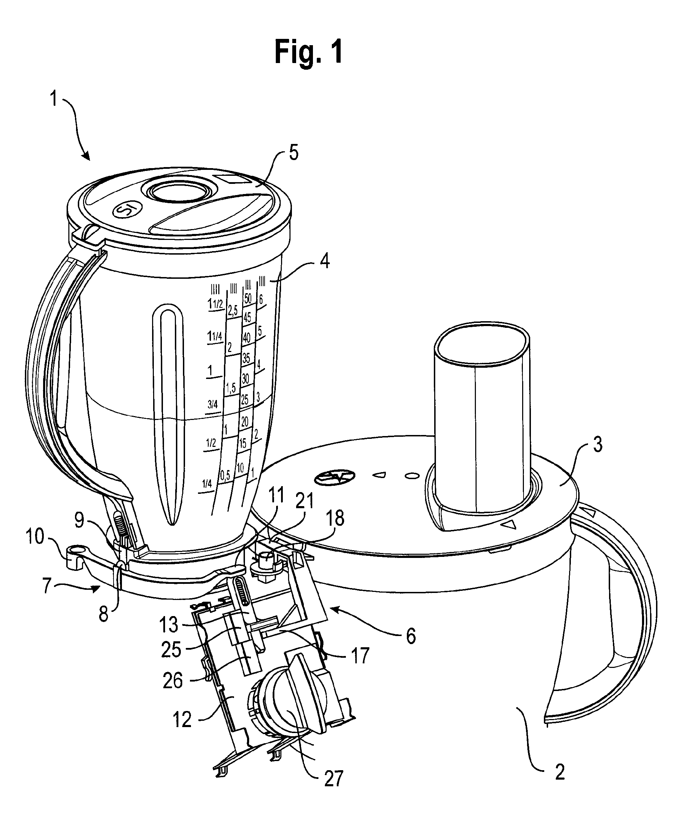

Die in Fig. 1 dargestellte Küchenmaschine 1 weist an seinem (nicht dargestellten) Gehäuse eine erste Kupplungsstelle für eine Rührschüssel 2 mit Deckel 3 und eine zweite Kupplungsstelle für einen Mixbecher 4 mit Deckel 5 auf. Rührschüssel 2 und Mixbecher 4 können jeweils durch einen Bajonettmechanismus an ihren Kupplungsstellen lösbar befestigt werden. Werkzeuge in der Rührschüssel 2 und in dem Mixbecher 4 werden mittels an den Kupplungsstellen aus dem Gehäuse der Küchenmaschine 1 herausragender Wellen angetrieben, die ihrerseits von einem Motor der Küchenmaschine 1 angetrieben werden, der im Gehäuse unter der Kupplungsstelle für den Mixbecher 4 angeordnet ist. Die Werkzeuge können z.B. Knethaken, Rührbesen oder Messer sein.

Anstelle des Mixbechers 4 kann auch ein Abdeckteil an dessen Kupplungsstelle angebracht werden, das die Welle dieser Kupplungsstelle abdeckt, um Verletzungen zu vermeiden, wenn die Küchenmaschine 1 ohne Mixbecher 4 betrieben wird.

Die Küchenmaschine 1 ist mit einem Sicherheitsmechanismus ausgestattet, der verhindert, dass die Maschine 1 betrieben werden kann, wenn nicht beide Kupplungsstellen mit Rührschüssel 2 und Deckel 3 bzw. Mixbecher 4 und Deckel 5 oder letztere Kupplungsstelle alternativ mit dem Abdeckteil bedeckt ist. Hierzu ist jede Kupplungsstelle mit einer Erfassungseinrichtung 6, 7 ausgestattet, die durch Aufsetzen der Rührschüssel 2 mit Deckel 3 bzw. durch Aufsetzen des Mixbechers 4 mit Deckel 5 betätigt wird.

Dazu ist die dem Mixbecher 4 mit Deckel 5 zugeordnete Erfassungseinrichtung 7 mit einem Tastelement 8 ausgestattet, das einem Vorsprung 9 des Mixbechers 4 gegenüberliegt, der durch einen eigenen Mechanismus aus dem Mixbecher 4 herausragt, wenn dieser mit seinem Deckel 5 versehen ist. Wenn der Mixbecher 4 mit aufgesetztem Deckel 5 auf die Kupplungsstelle aufgesetzt wird, wird das Tastelement 8 der Erfassungseinrichtung 7 nach unten gedrückt. Die Erfassungseinrichtung 7 ist hebelförmig ausgebildet und an ihrem Ende 10 in der Nähe des Tastelements 8 so am Gehäuse der Küchenmaschine festgelegt, dass sie in Folge des Herunterdrückens des Tastelements 8 nach unten geschwenkt wird. Dabei drückt ein Betätigungselement 11 am anderen Ende der hebelförmigen Erfassungseinrichtung 7 ein auf einer Leiterplatte 12 angebrachtes längliches Schaltelement 13 nach unten.

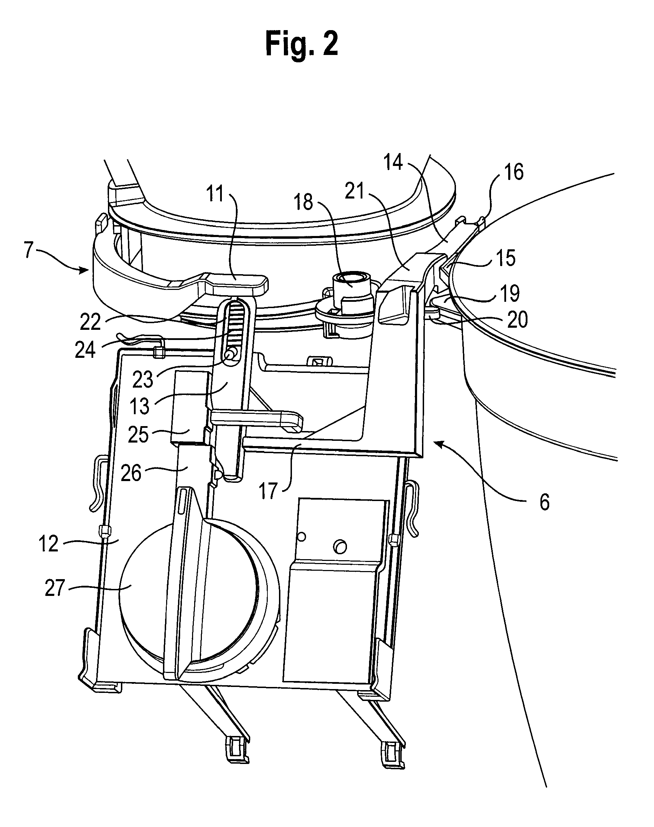

Weiter ist, wie in Fig. 2 dargestellt, die der Rührschüssel 2 mit Deckel 3 zugeordnete Erfassungseinrichtung 6 ebenfalls mit einem Tastelement 14 ausgestattet, das von einem Vorsprung 15 am Deckel 3 der Rührschüssel 2 horizontal in eine vom Deckel 3 weg weisende Richtung verlagert wird, wenn der Deckel 3 ordnungsgemäß auf die Rührschüssel 2 aufgesetzt wird. Die Erfassungseinrichtung 6 weist eine Hebel auf, der an seinem Ende 16 in der Nähe des Tastelements 14 so am Gehäuse der Küchenmaschine 1 festgelegt ist, dass er durch das Betätigen des Tastelements 14 horizontal verschwenkt wird. Dabei drückt ein Betätigungselement 17 am anderen Ende der Erfassungseinrichtung 6 seitlich auf das auf der Leiterplatte 12 angebrachte Schaltelement 13.

Die Erfassungseinrichtung 6 weist außerdem ein Freigabeelement 18 auf, das um eine Achse zwischen einer Blockierstellung und einer Freigabestellung drehbar ist und durch einen Vorsprung 19 an der Rührschüssel 2 von der Blockierstellung in die Freigabestellung gebracht wird, wenn die Rührschüssel 2 ordnungsgemäß an ihrer Kupplungsstelle angebracht wird. Dazu ist an dem Freigabelelement ein Hebel 20 einstückig angebracht. Das Freigabeelement 18 greift an einem Abschnitt 21 des Hebels an und verhindert in der Blockierstellung, dass das Betätigungselement 17 das Schaltelement 13 betätigt. Mittels einer Feder wird es in unbetätigtem Zustand in die Blockierstellung zurückgestellt.

Das Schaltelement 13 weist in seinem oberen Bereich ein Langloch 22 auf, in das ein Zapfen 23 eingreift, sodass das Schaltelement 13 in Richtung des Langlochs 22 verschiebbar und um die Achse des Zapfens 23 drehbar ist. Genauer kann das Schaltelement 13 durch das Betätigungselement 11 der dem Mixbecher 4 mit Deckel 5 zugeordneten Erfassungseinrichtung 7 nach unten gedrückt werden. Außerdem kann es durch das Betätigungselement 16 der dem Deckel 3 der Rührschüssel 2 zugeordneten Erfassungseinrichtung 6 um den Zapfen 23 rotiert werden. Eine Schraubenfeder 24 im Langloch 21 stellt das Schaltelement 13 in Längsrichtung in seine Ausgangsstellung zurück, wenn es nicht durch das dem Mixbecher 4 mit Deckel 5 zugeordnete Betätigungselement 11 betätigt wird.

Auf der Leiterplatte 12 ist außerdem ein Kontaktschalter 25 angeordnet, der so im Stromkreis des Motors liegt, dass er diesen unterbricht, wenn er nicht betätigt ist. Ein weiterer Schalter 26 ist vorzugsweise so an die Statorwicklung des Motors angeschlossen, dass deren Polarität durch Betätigen bzw. Lösen des Schalters 26 vertauscht wird, um den Motor schnell abzubremsen. Die Schalter 25, 26 sind relativ zum Schaltelement 13 so angeordnet, dass sie genau dann betätigt sind, wenn das Schaltelement 13 durch die Erfassungseinrichtungen 6, 7 gleichzeitig nach unten verschoben und um die Achse des Zapfens 23 gedreht ist. Dabei wird der weitere Schalter 26 kurz nach dem Kontaktschalter 25 betätigt.

Schließlich ist auf der Leiterplatte 12 noch ein Betriebsschalter 27 angeordnet, mit dem die Küchenmaschine 1 von außen betätigt werden kann. Mit dem Betriebsschalter 27 kann die Küchenmaschine 1 ein- und ausgeschaltet werden und es kann die Motorleistung oder Motordrehzahl geregelt werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die vorliegende Erfindung ermöglicht es vorteilhaft, Verletzungen bei unsachgemäßer Bedienung der Küchenmaschine zu begegnen. Sie ermöglicht es weiterhin vorteilhaft, alle elektrischen Schaltkomponenten der Küchenmaschine auf einer einzigen Leiterplatte zu integrieren. Sie ermöglicht es schließlich, auf einfache Weise ein schnelles Abbremsen des Motors sicherzustellen, wenn während des Betriebs Bearbeitungsgeräte von der Küchenmaschine abgenommen werden.

## Patentansprüche

1. Küchenmaschine (1) mit zwei an ihrem Gehäuse voneinander beabstandet angeordneten Kupplungsstellen zum Aufsetzen von Bearbeitungsgeräten (2, 3, 4, 5), mit einer von einem Motor der Küchenmaschine (1) angetriebenen Welle an jeder Kupplungsstelle, einem Kontaktschalter (25), der eine Stromzufuhr zum Motor unterbrechen kann, und einer Erfassungseinrichtung (6, 7) an jeder Kupplungsstelle, die jeweils durch Aufsetzen eines Bearbeitungsgeräts (2, 3, 4, 5) oder eines Abdeckteils auf die ihm zugeordnete Kupplungsstelle betätigbar ist, wobei der Kontaktschalter (1) mit den Erfassungseinrichtungen (6, 7) derart zusammenwirkt, dass er nur dann in einer Stellung stehen kann, in der der Motor mit Strom versorgt werden kann, wenn auf jeder Kupplungsstelle ein Bearbeitungsgerät (2, 3, 4, 5) oder ein Abdeckteil aufsitzt,
wobei das Zusammenwirken von Erfassungseinrichtungen (6, 7) und Kontaktschalter (25) durch ein Schaltelement (13) zum Betätigen des Kontaktschalters (25) vermittelt wird, das durch die Erfassungseinrichtungen (6, 7) derart bewegbar ist, dass es den Kontaktschalter (25) nur betätigen kann, wenn auf jeder Kupplungsstelle ein Bearbeitungsgerät (2, 3, 4, 5) oder ein Abdeckteil aufsitzt,
**dadurch gekennzeichnet, dass das** Schaltelement (13) durch Betätigen der Erfassungseinrichtung (7) einer ersten der beiden Kupplungsstellen aus verschiebbar ist und durch Betätigen der Erfassungseinrichtung (6) einer zweiten der beiden Kupplungsstellen um eine Achse drehbar ist**.**

2. Küchenmaschine (1) nach Anspruch 1, **dadurch gekennzeichnet, dass** der Kontaktschalter (25) im Stromkreis des Motors liegt und er nur dann in seiner geschlossenen Stellung stehen kann, wenn auf jeder Kupplungsstelle ein Bearbeitungsgerät (2, 3, 4, 5) oder ein Abdeckteil aufsitzt.

3. Küchenmaschine (1) nach Anspruch 1, **dadurch gekennzeichnet, dass** das Schaltelement (13) ein Langloch (22) aufweist, in das ein Zapfen (23) eingreift, sodass das Schaltelement (13) in Richtung des Langlochs (22) verschiebbar und um die Achse des Zapfens (23) drehbar ist.

4. Küchenmaschine (1) nach Anspruch 1 oder 3, **dadurch gekennzeichnet, dass** das Schaltelement (13) eine Rückstelleinrichtung (24) aufweist, um es in eine Ausgangsstellung zurückzustellen, aus der es durch eine der Erfassungseinrichtungen (7) herausbewegt werden kann.

5. Küchenmaschine (1) nach einem der Ansprüche 1 bis 4, **dadurch gekennzeichnet, dass** das Schaltelement (13) durch den Kontaktschalter (25) in eine Ausgangsstellung rückstellbar ist, aus der es durch eine der Erfassungseinrichtungen (6) herausbewegbar ist.

6. Küchenmaschine (1) nach einem der vorherigen Ansprüche, **dadurch gekennzeichnet, dass** sie weiter einen Betriebsschalter (27) auf einer Gehäuseaußenseite aufweist, um den Motor zu betätigen.

7. Küchenmaschine (1) nach Anspruch 6, **dadurch gekennzeichnet, dass** der Betriebsschalter (27) mit dem Kontaktschalter (25) auf einer gemeinsamen Leiterplatte (12) angeordnet ist.

8. Küchenmaschine (1) nach einem der vorherigen Ansprüche, **dadurch gekennzeichnet, dass** ein weiterer Schalter (26) vorgesehen ist, der so angeordnet ist, dass er in gleicher Weise wie der Kontaktschalter (25) mit den Erfassungseinrichtungen (6, 7) zusammenwirkt, sodass beide Schalter (25, 26) betätigbar sind.

9. Küchenmaschine (1) nach einem der vorherigen Ansprüche, **dadurch gekennzeichnet, dass** die Erfassungseinrichtung (6, 7) einen Hebel umfasst mit einem Tastelement (8, 14), um die Anwesenheit eines Bearbeitungsgeräts (2, 3, 4, 5) zu erfassen, und einem Betätigungselement (11, 17), um den Kontaktschalter (25) zu betätigen.

10. Küchemaschine (1) nach einem der vorherigen Ansprüche, **dadurch gekennzeichnet, dass** an eine der Kupplungsstellen ein Bearbeitungsgerät (2, 3) ankuppelbar ist, das eine Rührschüssel (2) und einen Deckel (3) zum Abdecken der Rührschüssel (2) umfasst, und die der Kupplungsstelle zugeordnete Erfassungseinrichtung (6) ein Element (14) zum Detektieren der Rührschüssel (2), ein Element (18) zum Detektieren des Deckels (3) und ein Betätigungselement (17) zum Betätigen des Kontaktschalters (25) umfasst, wobei die Elemente (14, 18) so miteinander und/oder mit dem Kontaktschalter (25) zusammenwirken, dass der Kontaktschalter (25) nur dann in seiner geschlossenen Stellung stehen kann, wenn auf der Kupplungsstelle die Rührschüssel (2) aufsitzt und auf der Rührschüssel (2) der Deckel (3) aufsitzt.

11. Küchenmaschine (1) nach Anspruch 10, **dadurch gekennzeichnet, dass** das eine der Elemente (14) zum Detektieren der Rührschüssel (2) oder des Deckels (3) ein Tastelement ist, das durch Aufsetzen eines ersten Mitglieds der Gruppe Rührschüssel (2) und Deckel (3) betätigbar ist, und das andere der Elemente (18) zum Detektieren der Rührschüssel (2) oder des Deckels (3) ein Freigabelelement ist, das durch Aufsetzen des anderen Mitglieds der Gruppe Rührschüssel (2) und Deckel (3) von einer Blockierstellung in eine Freigabestellung gebracht werden kann, sodass das Betätigungselement (17) den Kontaktschalter (25) nur dann in seiner geschlossene Stellung bringen kann, wenn das Tastelement betätigt ist und das Freigabeelement in seiner Freigabestellung steht.

12. Küchenmaschine (1) nach Anspruch 11, **dadurch gekennzeichnet, dass** das Freigabeelement (18) um eine Achse zwischen der Blockierstellung und der Freigabestellung drehbar ist.

13. Küchenmaschine (1) nach Anspruch 11 oder 12, **dadurch gekennzeichnet, dass** das Freigabeelement (18) ein Rückstellelement umfasst, um es in die Blockierstellung zurückzustellen, wenn die Rührschüssel (2) nicht aufgesetzt ist.

14. Küchenmaschine (1) nach einem der Ansprüche 11 bis 13, **dadurch gekennzeichnet, dass** das Freigabeelement (18) einen Hebel (20) aufweist, der durch einen Vorsprung (19) der Rührschüssel (2) betätigbar ist, um es in seine Freigabestellung zu bringen.

15. Küchenmaschine (1) nach einem der Ansprüche 11 bis 14, **dadurch gekennzeichnet, dass** das Tastelement (14) und das Betätigungselement (17) durch einen Hebelabschnitt (21) verbunden sind.

16. Küchenmaschine (1) nach Anspruche 15, **dadurch gekennzeichnet, dass** das Freigabeelement (18) in seiner Blockierstellung derart an dem Hebelabschnitt (21) angreift, dass es ein Umsetzen einer Betätigung des Tastelements (14) in eine den Kontaktschalter (25) direkt oder indirekt betätigende Bewegung unterbinden kann.

## Claims

1. Food processor (1) with two coupling points for the positioning of processing devices (2, 3, 4, 5) arranged at a distance from one another on its housing, with a shaft driven by a motor of the food processor (1) at each coupling point, a contact switch (25), which can interrupt a power supply to the motor and a detection facility (6, 7) at each coupling point, which can be actuated respectively by the positioning of a processing device (2, 3, 4, 5) or cover part on the coupling point assigned to it, wherein the contact switch (1) interacts with the detection facilities (6, 7) in such a manner that it can only be in a position in which the motor can be supplied with power, if a processing device (2, 3, 4, 5) or cover part is positioned on each coupling point, wherein the interaction of detection facilities (6, 7) and contact switch (25) is brought about by a switching element (13) for actuating the contact switch (25), which can be moved by the detection facilities (6, 7) in such a manner that it can only actuate the contact switch (25), if a processing device (2, 3, 4, 5) or cover part is positioned on each coupling point, **characterised in that** the switching element (13) can be displaced by actuating the detection facility (7) of a first of the two coupling points and be rotated about an axis by actuating the detection facility (6) of a second of the two coupling points.

2. Food processor (1) according to claim 1, **characterised in that** the contact switch (25) is located in the power circuit of the motor and it can only be in its closed position if a processing device (2, 3, 4, 5) or cover part is positioned on each coupling point.

3. Food processor (1) according to claim 1, **characterised in that** the switching element (13) has an oblong hole (22), in which a pin (23) engages, so that the switching element (13) can be displaced in the direction of the oblong hole (22) and be rotated about the axis of the pin (23).

4. Food processor (1) according to claim 1 or 3, **characterised in that** the switching element (13) has a reset facility (24), to reset it to an initial position, from which it can be moved by one of the detection facilities (7).

5. Food processor (1) according to one of claims 1 to 4, **characterised in that** the switching element (13) can be reset by the contact switch (25) to an initial position, from which it can be moved by one of the detection facilities (6).

6. Food processor (1) according to one of the preceding claims, **characterised in that** it also has an operating switch (27) on an outer face of the housing to actuate the motor.

7. Food processor (1) according to claim 6, **characterised in that** the operating switch (27) is arranged with the contact switch (25) on a common printed circuit board (12).

8. Food processor (1) according to one of the preceding claims, **characterised in that** a further switch (26) is provided, which is arranged in such a manner that it interacts with the detection facilities (6, 7) in the same manner as the contact switch (25) so that both switches (25, 26) can be actuated.

9. Food processor (1) according to one of the preceding claims, **characterised in that** the detection facility (6, 7) comprises a lever with a probe element (8, 14) to detect the presence of a processing device (2, 3, 4, 5) and an actuation element (11, 17) to actuate the contact switch (25).

10. Food processor (1) according to one of the preceding claims, **characterised in that** a processing device (2, 3) can be coupled to one of the coupling points, comprising a mixing bowl (2) and a lid (3) to cover the mixing bowl (2) and the detection facility (6) assigned to the coupling point comprises an element (14) for detecting the mixing bowl (2), an element (18) for detecting the lid (3) and an actuation element (17) for actuating the contact switch (25), the elements (14, 18) interacting with one another and/or with the contact switch (25) in such a manner that the contact switch (25) can only be in its closed position, if the mixing bowl (2) is positioned on the coupling point and the lid (3) is positioned on the mixing bowl (2).

11. Food processor (1) according to claim 10, **characterised in that** one of the elements (14) for detecting the mixing bowl (2) or lid (3) is a probe element, which can be actuated by the positioning of a first member of the mixing bowl (2) and lid (3) group, and the other of the elements (18) for detecting the mixing bowl (2) or lid (3) is a release element, which can be moved from a blocking position to a release position by the positioning of the other member of the mixing bowl (2) and lid (3) group, so that the actuation element (17) can only move the contact switch (25) in its closed position if the probe element is actuated and the release element is in its release position.

12. Food processor (1) according to claim 11, **characterised in that** the release element (18) can be pivoted about an axis between the blocking position and the release position.

13. Food processor (1) according to claim 11 or 12, **characterised in that** the release element (18) comprises a reset element to reset it to the blocking position if the mixing bowl (2) is not in position.

14. Food processor (1) according to one of claims 11 to 13, **characterised in that** the release element (18) has a lever (20), which can be actuated by a nose (19) on the mixing bowl (2) to move it into its release position.

15. Food processor (1) according to one of claims 11 to 14, **characterised in that** the probe element (14) and actuation element (17) are connected by a lever segment (21).

16. Food processor (1) according to claim 15, **characterised in that** in its blocking position the release element (18) engages with the lever segment (21) in such a manner that it can prevent the conversion of an actuation of the probe element (14) to a movement that actuates the contact switch (25) directly or indirectly.

## Revendications

1. Robot de cuisine (1) comportant deux points d'accouplement disposés en étant espacés l'un de l'autre sur son boîtier et servant à placer des appareils de travail (2, 3, 4, 5) comprenant, au niveau de chaque point d'accouplement, un arbre entraîné par un moteur du robot de cuisine (1), un interrupteur de contact (25) qui peut couper une alimentation en courant fourni au moteur, et un dispositif de détection (6, 7) au niveau de chaque point d'accouplement, dispositif de détection qui peut être actionné à chaque fois par la mise en place d'un appareil de travail (2, 3, 4, 5) ou d'une pièce de recouvrement, sur le point d'accouplement qui lui est associé, dans lequel l'interrupteur de contact (1) agit de façon conjointe avec les dispositifs de détection (6, 7), de manière telle qu'il puisse être alors dans une position dans laquelle le moteur peut être alimenté en courant, seulement si un appareil de travail (2, 3, 4, 5) ou une pièce de recouvrement est placé(e) sur chaque point d'accouplement, dans lequel l'action conjointe des dispositifs de détection (6, 7) et de l'interrupteur de contact (25) est assurée par un élément de commutation (13) servant à actionner l'interrupteur de contact (25), élément de commutation qui peut être déplacé par les dispositifs de détection (6, 7), de manière telle que ledit élément de commutation puisse actionner l'interrupteur de contact (25), seulement si un appareil de travail (2, 3, 4, 5) ou une pièce de recouvrement est placé(e) sur chaque point d'accouplement, **caractérisé en ce que** l'élément de commutation (13) peut, à partir d'un premier des deux points d'accouplement, être déplacé par l'actionnement du dispositif de détection (7) et peut tourner autour d'un axe par l'actionnement du dispositif de détection (6) au niveau d'un second des deux points d'accouplement.

2. Robot de cuisine (1) selon la revendication 1, **caractérisé en ce que** l'interrupteur de contact (25) se trouve dans le circuit de courant du moteur et ledit interrupteur de contact peut être alors dans sa position fermée, seulement si un appareil de travail (2, 3, 4, 5) ou une pièce de recouvrement est placé(e) sur chaque point d'accouplement.

3. Robot de cuisine (1) selon la revendication 1, **caractérisé en ce que** l'élément de commutation (13) présente un trou oblong (22) dans lequel s'engage un tourillon (23), de sorte que l'élément de commutation (13) peut être déplacé en direction du trou oblong (22) et placé en rotation autour de l'axe du tourillon (23).

4. Robot de cuisine (1) selon la revendication 1 ou 3, **caractérisé en ce que** l'élément de commutation (13) présente un dispositif de rappel (24) pour faire revenir l'élément de commutation dans une position initiale à partir de laquelle il peut être déplacé par l'un des dispositifs de détection (7).

5. Robot de cuisine (1) selon l'une quelconque des revendications 1 à 4, **caractérisé en ce que** l'élément de commutation (13) peut être replacé, par l'interrupteur de contact (25), dans une position initiale à partir de laquelle ledit élément de commutation est déplaçable par l'un des dispositifs de détection (6).

6. Robot de cuisine (1) selon l'une quelconque des revendications précédentes, **caractérisé en ce qu'**il présente en outre un interrupteur de fonctionnement (27) sur un côté extérieur du boîtier, pour actionner le moteur.

7. Robot de cuisine (1) selon la revendication 6, **caractérisé en ce que** l'interrupteur de fonctionnement (27) est disposé, avec l'interrupteur de contact (25), sur une plaquette à circuit imprimé commune (12).

8. Robot de cuisine (1) selon l'une quelconque des revendications précédentes, **caractérisé en ce qu'**il est prévu un autre interrupteur (26) qui est disposé, de sorte qu'il agit de façon conjointe avec les dispositifs de détection (6, 7), de la même manière que l'interrupteur de contact (25), de sorte que les deux interrupteurs (25, 26) peuvent être actionnés.

9. Robot de cuisine (1) selon l'une quelconque des revendications précédentes, **caractérisé en ce que** le dispositif de détection (6, 7) comprend un levier comportant un élément palpeur (8, 14) pour détecter la présence d'un appareil de travail (2, 3, 4, 5), et comportant un élément d'actionnement (11, 17) pour actionner l'interrupteur de contact (25).

10. Robot de cuisine (1) selon l'une quelconque des revendications précédentes, **caractérisé en ce qu'**un appareil de travail (2, 3) peut être accouplé au niveau de l'un des points d'accouplement, appareil de travail qui comprend un bol mélangeur (2) et un couvercle (3) servant à couvrir le bol mélangeur (2), et le dispositif de détection (6) associé au point d'accouplement comprend un élément (14) servant à la détection du bol mélangeur (2), un élément (18) servant à la détection du couvercle (3) et un élément d'actionnement (17) servant à l'actionnement de l'interrupteur de contact (25), où les éléments (14, 18) agissent de façon conjointe l'un avec l'autre et/ou avec l'interrupteur de contact (25), de sorte que l'interrupteur de contact (25) peut être alors dans sa position fermée, seulement si le bol mélangeur (2) est placé sur le point d'accouplement et si le couvercle (3) est placé sur le bol mélangeur (2).

11. Robot de cuisine (1) selon la revendication 10, **caractérisé en ce que** l'un des éléments (14) servant à la détection du bol mélangeur (2) ou du couvercle (3) est un élément palpeur qui peut être actionné par la mise en place d'un premier élément du groupe formé par le bol mélangeur (2) et par le couvercle (3), et **en ce que** l'autre des éléments (18) servant à la détection du bol mélangeur (2) ou du couvercle (3) est un élément de déblocage qui, à partir d'une position de blocage, peut être placé dans une position de déblocage suite à la mise en place de l'autre élément du groupe formé par le bol mélangeur (2) et par le couvercle (3), de sorte que l'élément d'actionnement (17) peut alors placer l'interrupteur de contact (25) dans sa position fermée, seulement si l'élément palpeur est actionné et si l'élément de déblocage est dans sa position de déblocage.

12. Robot de cuisine (1) selon la revendication 11, **caractérisé en ce que** l'élément de déblocage (18) peut tourner autour d'un axe, entre la position de blocage et la position de déblocage.

13. Robot de cuisine (1) selon la revendication 11 ou 12, **caractérisé en ce que** l'élément de déblocage (18) comprend un élément de rappel pour faire revenir ledit élément de déblocage dans la position de blocage, si le bol mélangeur (2) n'est pas mis en place.

14. Robot de cuisine (1) selon l'une quelconque des revendications 11 à 13, **caractérisé en ce que** l'élément de déblocage (18) présente un levier (20) qui peut être actionné par une partie saillante (19) du bol mélangeur (2), pour placer ledit élément de déblocage dans sa position de déblocage.

15. Robot de cuisine (1) selon l'une quelconque des revendications 11 à 14, **caractérisé en ce que** l'élément palpeur (14) et l'élément d'actionnement (17) sont reliés par une partie de levier (21).

16. Robot de cuisine (1) selon la revendication 15, **caractérisé en ce que** l'élément de déblocage (18), dans sa position de blocage, agit sur la partie de levier (21), de manière telle que ledit élément de déblocage puisse empêcher une transformation d'un actionnement de l'élément palpeur (14), en un mouvement actionnant directement ou indirectement l'interrupteur de contact (25).
